(19) Europäisches Patentamt
European Patent Office
Office européen des brevets

(11) Veröffentlichungsnummer: **0 083 765**
**A2**

(12) # EUROPÄISCHE PATENTANMELDUNG

(21) Anmeldenummer: 82111706.6

(22) Anmeldetag: 16.12.82

(51) Int. Cl.³: C 09 B 62/006
D 06 P 3/66, D 06 P 3/10

(30) Priorität: 08.01.82 DE 3200341

(43) Veröffentlichungstag der Anmeldung:
20.07.83 Patentblatt 83/29

(84) Benannte Vertragsstaaten:
CH DE FR GB IT LI

(71) Anmelder: BASF Aktiengesellschaft
Carl-Bosch-Strasse 38
D-6700 Ludwigshafen(DE)

(72) Erfinder: Schaffer, Ortwin, Dr.
Bruesseler Ring 43
D-6700 Ludwigshafen(DE)

(54) **Reaktivfarbstoffe.**

(57) Die Erfindung betrifft Verbindungen der allgemeinen Formel I

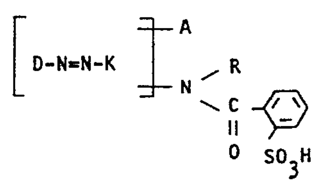

I,

in der
D den Rest einer Diazokomponente der Anilin- oder Naphthalinreihe,
A einen reaktiven Rest, der direkt oder über eine Imino- oder Alkyliminogruppe an das aromatische System des Azofarbstoffs gebunden ist,
R Wasserstoff oder gegebenenfalls substituiertes Alkyl und
K den Rest einer gegebenenfalls azogruppenhaltigen Kupplungskomponente bedeuten.

Die erfindungsgemäßen Verbindungen eignen sich sehr gut zum Färben hydroxyl- und aminogruppenhaltiger Substrate, insbesondere von Cellulosefasern.

EP 0 083 765 A2

Croydon Printing Company Ltd

## Reaktivfarbstoffe

Die Erfindung betrifft Verbindungen der allgemeinen Formel I

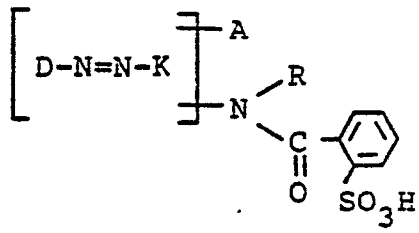

I,

in der

D den Rest einer Diazokomponente der Anilin- oder Naphthalinreihe,

A einen reaktiven Rest, der direkt oder über eine Imino- oder Alkyliminogruppe an das aromatische System des Azofarbstoffs gebunden ist,

R Wasserstoff oder gegebenenfalls substituiertes Alkyl und

K den Rest einer gegebenenfalls azogruppenhaltigen Kupplungskomponente bedeuten.

Die Reste der Kupplungskomponenten K entstammen z.B. der Anilin-, Naphthalin-, Pyrazol-, Pyridin-, Pyrimidin- oder Acetoacetarylidreihe, wobei diese Bezeichnungen nur den Grundkörper dieser Verbindungsklassen angeben; die Pyrazolreihe umfaßt demnach z.B. auch die Pyrazolonverbindungen und die Naphthalinreihe z.B. Aminonaphthaline, Aminonaphthole, Aminonaphthalinsulfonsäuren und Aminonaphtholsulfonsäuren.

Bg/P

Einzelne Kupplungskomponenten sind beispielsweise:

Anilin-N-ω-methansulfonat, o- und m-Toluidin, o- und m-Anisidin, Anthranilsäure-N-ω-methansulfonat, Kresidin, 2,5-Dimethylanilin, 2,5-Dimethoxyanilin, m-Aminoacetanilid, 3-Amino-4-methoxyacetanilid, 3-Amino-4-methylacetanilid, 3-Amino-4-chloracetanilid, m-Aminophenylharnstoff, N-Methylanilin, N-Methyl-m-toluidin, N-Äthylanilin, N-Äthyl-m-toluidin, N-ß-Hydroxyäthylanilin oder N-ß-Hydroxyäthyl-m-toluidin.

Pyrimidinkupplungskomponenten sind z.B.:

2-(ß-Aminoäthyl)amino-4,6-dihydroxypyrimidin, 2-(γ-Aminopropyl)amino-4,6-dihydroxypyrimidin, 2-(ß-Aminoäthyl)-amino-4,6-diaminopyrimidin, 2-(ß-Aminoäthyl)amino-4-hydroxy-6-aminopyrimidin, 2-(γ-Aminopropyl)amino-4,6-diaminopyrimidin, 2-(γ-Aminopropyl)amino-4-hydroxy-6-aminopyrimidin, 2-(3'-Aminophenyl)amino-4,6-dihydroxypyrimidin, 2-(4'-Aminophenyl)amino-4,6-dihydroxypyrimidin, 2-(3'-Aminophenyl)amino-4-hydroxy-6-aminopyrimidin, 2-(4'-Aminophenyl)amino-4-hydroxy-6-aminopyrimidin, 2-(3'-Aminophenyl)amino-4,6-diaminopyrimidin, 2-(4'-Aminophenyl)-amino-4,6-diaminopyrimidin, 1-Aminoäthyl-2-amino-4-hydroxypyridon-6 oder 1-(3'- oder 4'-Aminophenyl)-2-amino-4-hydroxy-pyrimidon-6.

Als Pyridinkupplungskomponenten sind z.B. zu nennen:

1-(ß-Aminoäthyl)-2-hydroxy-4-methyl-5-cyan-pyridon-6, 1-(γ-Aminopropyl)-2-hydroxy-4-methyl-5-carbonamido-pyridon-6, 1-(ß-Aminoäthyl)-2-hydroxy-4-methyl-5-methylsulfonyl-pyridon-6, 1-(γ-Aminopropyl)-2-hydroxy-4-methyl-5-sulfomethylen-pyridon-6, 1-(4'-Aminophenyl)-2-hydroxy-5-cyan-pyridon-6, 1-(3'-Aminophenyl)-2-hydroxy-5-cyan-pyridon-6, 1-(3'-Aminophenyl)-2-hydroxy-5-carbonamido-pyridon-6 oder 1-(4'-Aminophenyl)-2-hydroxy-5-methylsulfonyl-pyridon-6.

Als Aminonaphthaline sind beispielsweise zu nennen:

α-Naphthylamin, N-Äthyl-α-naphthylamin, 1,5-Naphthylendiamin oder 1,8-Naphthylendiamin.

Aminonaphthole sind beispielsweise:

1-Amino-5-naphthol, 1-Amino-6-naphthol, 1-Amino-7-naphthol, 1-Acetamino-7-naphthol oder 1-Methylsulfonylamino-7-naphthol.

Als Aminonaphtholsulfonsäuren sind beispielweise zu nennen:

1-Amino-5-naphthol-7-sulfonsäure, 1-Amino-8-naphthol-4-sulfonsäure, 1-Amino-8-naphthol-6-sulfonsäure, 1-Amino-8-naphthol-2,4-disulfonsäure, 1-Amino-8-naphthol-3,6-disulfonsäure, 1-Amino-8-naphthol-4,6-

disulfonsäure, 2-Amino-3-naphthol-6-sulfonsäure, 2-Amino-5-naphthol-7-sulfonsäure, 2-N-Methylamino-5-naphthol-7-sulfonsäure, 2-Amino-5-naphthol-1,7-disulfonsäure, 2-Amino-8-naphthol-6-sulfonsäure, 2-N-Methylamino-8-naphthol-6-sulfonsäure oder 2-Amino-8-naphthol-3,6-disulfonsäure.

Pyrazolone sind z.B.:

1-(3'-Aminophenyl)-3-carboxy-5-pyrazolon, 1-(3'-Aminophenyl)-3-methyl-5-pyrazolon, 1-(4'-Aminophenyl)-3-methyl-5-pyrazolon, 1-(4'-Aminophenyl)-3-carboxy-5-pyrazolon, 1-(3'-Nitrophenyl)-3-carboxy-5-pyrazolon, 1-(4'-Nitrophenyl)-3-carboxy-5-pyrazolon, 1-(3'-Nitrophenyl)-3-methyl-5-pyrazolon, 1-(4'-Nitrophenyl)-3-methyl-5-pyrazolon sowie die in 3-Stellung durch Carboxyl substituierte Pyrazolone, die neben einer Amino- oder Nitrogruppe im Phenylring in 2'- bzw. 6'-Stellung noch weiter durch Chlor, Brom, Methyl, Äthyl, Methoxy, Äthoxy, Cyan, Acetyl, Carboxy oder Sulfo substituiert sein können.

Acetoacetarylide sind vor allem Acetessiganilide, die im Phenylkern eine Nitro-, Acetamino- oder Amino-Gruppe tragen und die noch weiter durch Chlor, Brom, Methyl, Äthyl, Methoxy, Äthoxy, Cyan, Sulfo oder Carboxy ein- oder mehrfach substituiert sein können.

Von besonderer Bedeutung sind sulfogruppenhaltige Kupplungskomponenten, die in p-Stellung zu einer Aminogruppe kuppeln oder die in o-Stellung zu einer Hydroxylgruppe kuppeln und noch weiterhin eine acylierbare Aminogruppe tragen. Als Beispiele für solche Kupplungskomponenten seien genannt:

1-Aminonaphthalin-6-sulfonsäure, 1-Aminonaphthalin-7-sulfonsäure, 1-Aminonaphthalin-8-sulfonsäure, 1-Amino-8-naphthol-4-sulfonsäure, 1-Amino-8-naphthol-2,4-disulfonsäure, 1-Amino-8-naphthol-3,6-disulfonsäure, 1-Amino-8-naphthol-4,6-disulfonsäure, 2-Amino-5-naphthol-7-sulfonsäure, 2-Amino-8-naphthol-6-sulfonsäure, 1-(2'-Sulfo-5'-aminophenyl)-3-carboxy-5-pyrazolon, 1-(2'-Sulfo-4'-aminophenyl)-3-carboxy-5-pyrazolon oder 1-(2'-Sulfo-4'-nitrophenyl)-3-carboxy-5-pyrazolon.

Die faserreaktiven Reste A können sowohl in der Diazoals auch Kupplungskomponente stehen. Reaktive Reste im Sinne der Erfindung sind alle Gruppen, die in Reaktivfarbstoffen zur Herstellung einer kovalenten Bindung mit dem Substrat befähigt sind. Diese Gruppen leiten sich insbesondere von Triazinen, Pyrimidinen, Chinoxalinen, Chinazolinen, Vinylsulfonen oder Vorstufen davon, Acrylverbindungen, Halogenpropionylverbindungen, Halogenacetylverbindungen oder Säuren des Phosphors ab.

Auszugsweise seien im Folgenden einige Verbindungen genannt, die über eine Imino-, Methylimino-, Äthylimino-, Oxäthylimino-, Cyanäthylimino-, Sulfomethylenimino- oder Carboxymethyleniminobrücke an den Farbstoff gebunden sein können und eine mit Fasern reaktionsfähige Gruppe enthalten:

Acryloylchlorid, ß-Chlorpropionylchlorid, ß-Brompropionylchlorid, Chloracetylchlorid, 2,3-Dichlorchinoxalin-5- oder 6-carbonylchlorid, 2,3-Dichlorchinazolin-5- oder 6-sulfonylchlorid, 2,4,6-Trichlorpyrimidin,2,4,6-Trichlor-5-methylpyrimidin, 2,4,5,6-Tetrachlor-pyrimidin, 2,4,6-Trifluorpyrimidin, 2,4,6-Trifluor-5-chlorpyrimidin .

Insbesondere seien genannt:

Cyanurfluorid, Cyanurchlorid, Cyanurbromid, 2,4-Dichlor-6-methyltriazin, 2,4-Dichlor-6-phenyltriazin sowie die primären Kondensationsprodukte von Cyanurchlorid und Cyanurfluorid mit Ammoniak, Hydrazin, Hydroxylamin, Aminen, organ. Hydroxy- und Mercaptoverbindungen, also z.B.:

Methanol, Äthanol, Phenol, α- und ß-Naphthol, Chlorphenole, Kresole, sulfonierte Phenole, Thiophenol, Thioglykolsäure, Methylmercaptan, Thioacetamid, primäre oder sekundäre Alkylamine, wie z.B.:

Methylamin, Äthylamin, n- und i-Propylamin, Dimethylamin, Diäthylamin, ß-Hydroxyäthylamin, Di-(ß-hydroxyäthyl)amin, ß-Chloräthylamin, ß-Cyanäthylamin, ß-Methoxyäthylamin, Aminodiglykol, Aminotriglykol, Aminoessigsäure, N-Methylaminoessigsäure, Taurin, N-Methyltaurin, Piperidin, Morpholin, Aminoäthylmorpholin, N-Methylpiperazin, Cyclohexylamin, Anilin, N-Methylanilin, N-Oxyäthylanilin, N-Äthylanilin, Toluidin, Anisidin, Chloranilin, Cyananilin, Anilin- o-, m- und p-Sulfonsäure, Anilin-2,4, 2,5- und 3,5-disulfonsäure, N-Methylanilin- o-, m- und p-Sulfonsäure, o-, m- und p-Aminobenzoesäure, N-Methylanthranilsäure, Anthranilsäuremethylester, 4- und 5-Sulfo-aminobenzoesäure, 2-Amino-toluol-4-sulfonsäure, 5-Amino-2-hydroxybenzoesäure, Aminoäthylschwefelsäure und Mono- und Disulfonsäuren von 1-Amino- und 2-Aminonaphthalin.

Als Beispiele für faserreaktive Reste A, die sich von Vinylsulfonen oder Vorstufen davon ableiten, seien folgende Gruppen genannt:

Hydroxyäthylsulfonyl, Sulfatoäthylsulfonyl, Chloräthylsulfonyl, Vinylsulfonyl oder Phosphatoäthylsulfonyl.

Die Reste der Diazokomponenten D leiten sich von der Anilin- oder Naphthalinreihe ab. Sie sind vorzugsweise sulfogruppenhaltig und können weiterhin durch Fluor, Chlor, Brom, Methyl, Äthyl, Methoxy, Äthoxy, Cyan, Carboxy, Alkoxycarbonyl, Nitro, Amino, Methylsulfonyl, Acetyl oder Acetamino substituiert sein.

Auszugsweise seien einige Verbindungen, von denen sich D ableiten kann, genannt:

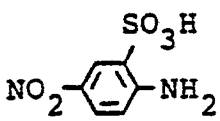 , 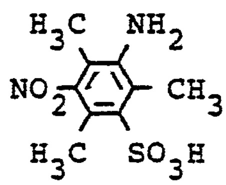 , 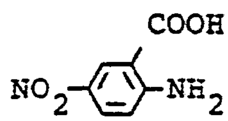 , 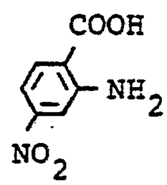 ,

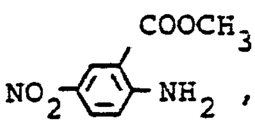 , 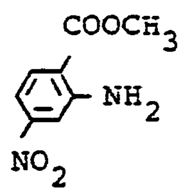 , 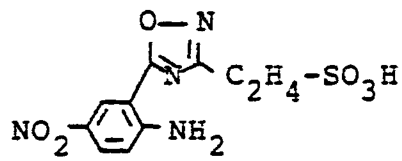 ,

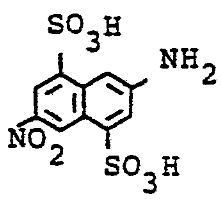 , 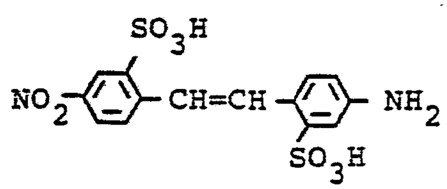 , 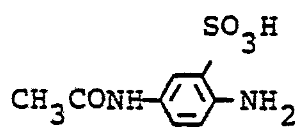 ,

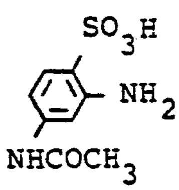 , 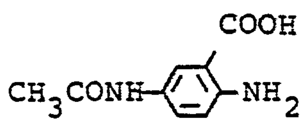 , 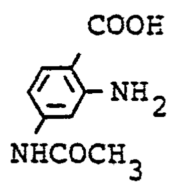 ,

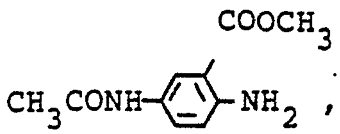 , 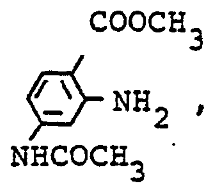 , 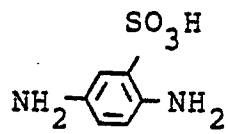 , 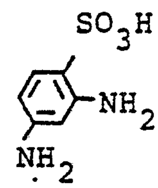 ,

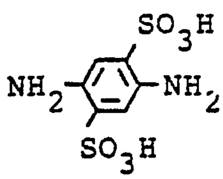 , 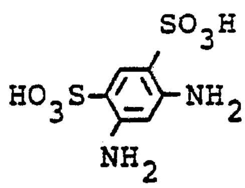 , 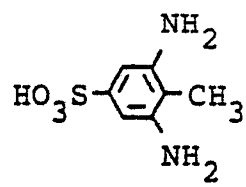 ,

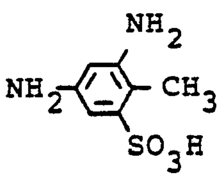 , 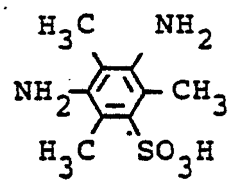 , 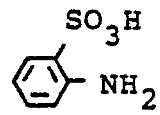 , 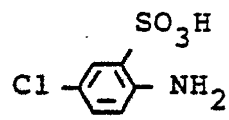 ,

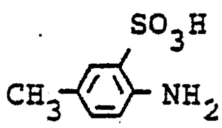 , 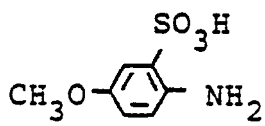 , 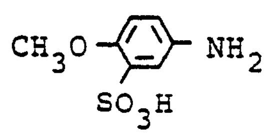 ,

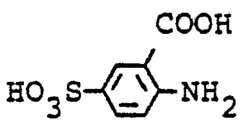 , 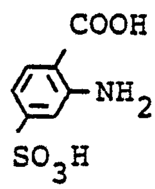 , 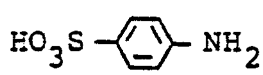 , 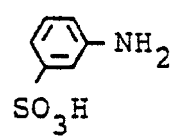 ,

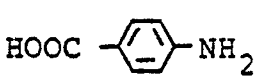 , 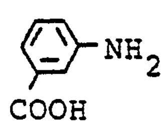 , 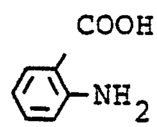 , 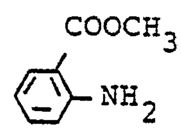 ,

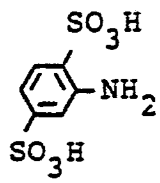 , 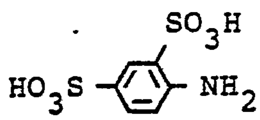 , 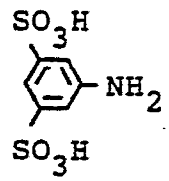 , 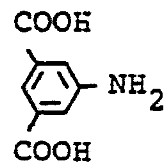 ,

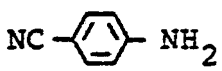 , 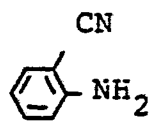 , 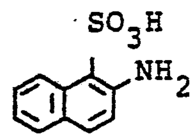 , 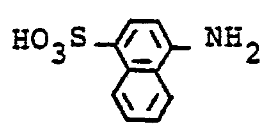 ,

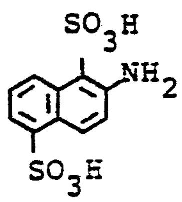 , 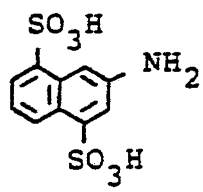 , 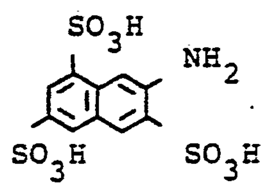 ,

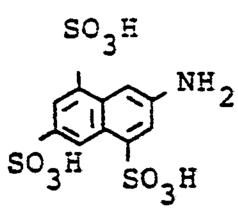 , 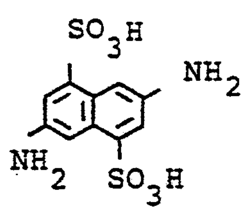 , 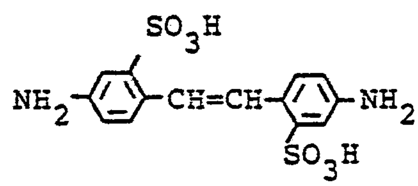 ,

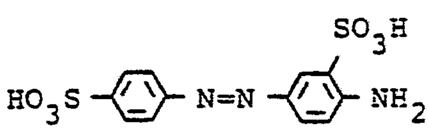 oder 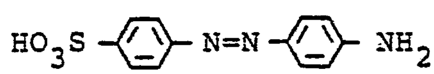 .

Von besonderer Bedeutung sind Verbindungen der Formel

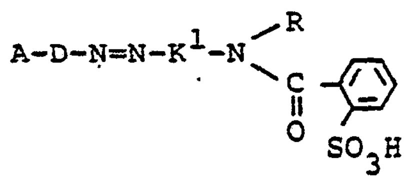

in der

$K^1$ den Rest einer Kupplungskomponente der Anilin-, Naphthalin-, Pyrazol-, Pyridin-, Pyrimidin- oder Acetessigarylidreihe ist und A, D und R die angegebene Bedeutung haben.

Technisch wertvoll sind auch Verbindungen der Formel

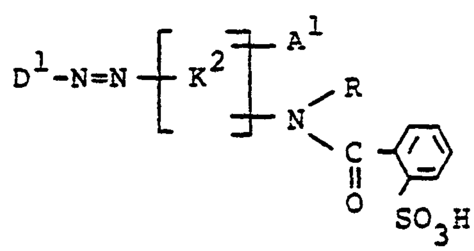

in der

$D^1$ der sulfogruppenhaltige Rest einer Diazokomponente der Anilin- oder Naphthalinreihe,

$A^1$ ein Fluor- oder Chlorpyrimidin- oder Fluor- oder Chlortriazinrest und

$K^2$ ein sulfogruppenfreier Rest der Anilinreihe sind und

R die angegebene Bedeutung hat,

sowie insbesondere Verbindungen der Formel

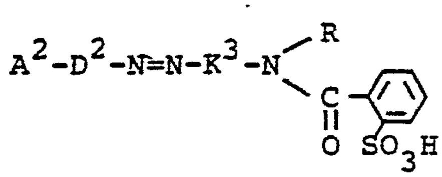

in der

$D^2$ ein sulfogruppenhaltiger Rest einer Diazokomponente der 1,3- oder 1,4-Diaminobenzol- oder 2,5- oder 2,6-Diaminonaphthalinreihe,

$K^3$ ein sulfogruppenhaltiger Rest einer Kupplungskomponente der Pyrazolon-, Aminonaphthalin- oder Aminonaphtholreihe und

$A^2$ ein reaktiver Chinoxalinoyl-, Pyrimidinyl-, Triazinyl-, Vinylsulfonyl- oder Sulfatoäthylsulfonylrest sind und

R die angegebene Bedeutung hat.

Die neuen Farbstoffe sind vorwiegend gelb bis rot und eignen sich vorzüglich für die verschiedenen Reaktivfärbeverfahren. Man erhält Färbungen auf hydroxylgruppenhaltigen Fasermaterialien, insbesondere Baumwolle, die sich durch hohe Brillanz, Farbstärke, Licht- und Naßechtheiten auszeichnen.

In den folgenden Beispielen beziehen sich Angaben über Teile und Prozente, sofern nicht anders vermerkt, auf das Gewicht.

Beispiel 1

11 Teile 1-(4'-Aminophenyl)-3-carboxy-5-pyrazolon werden in 100 Teilen N-Methylpyrrolidon suspendiert und auf 60 °C erwärmt, 9,4 Teile o-Sulfobenzoesäureanhydrid portionsweise zugesetzt und das Reaktionsgemisch bei dieser Temperatur bis zur vollständigen Umsetzung gehalten. Die klare Lösung wird mit Eiswasser auf o - 5 °C gekühlt, neutralisiert und das salzsauer diazotierte Reaktionsgemisch aus 9,4 Teilen 1,3-Phenylendiamin-4-sulfonsäure und 9,5 Teilen Cyanurchlorid eingetragen. Man kuppelt unter Zusatz von 11,2 Teilen Soda bei pH = 6 aus, fügt der neutralisierten Reaktionslösung 3 Teile Natriumdihydrogenphosphat und 3,6 Teile Dinatriumhydrogenphosphat zu und fällt mit Siedesalz. Das Preßgut wird gefriergetrocknet. Man erhält ein orangegelbes Pulver, das Baumwolle in brillanten gelben Tönen mit guter Lichtechtheit färbt.

Beispiel 2

Ersetzt man das in Beispiel 1 verwendete 1-(4'-Aminophenyl)-3-carboxy-5-pyrazolon durch 9,5 Teile 1-(4'-Aminophenyl)-3-methyl-5-pyrazolon, so erhält man einen Farbstoff mit ähnlichen Eigenschaften.

Beispiel 3

24 Teile 3-Amino-8-hydroxynaphthalin-6-sulfonsäure werden in 500 Teilen Wasser neutral gelöst, 24 Teile Natriumacetat zugesetzt und mit Eis auf 0 °C gekühlt. Man fügt portionsweise insgesamt 29,8 Teile fein pulverisiertes o-Sulfobenzoesäureanhydrid zu und rührt bei 0 - 5 °C bis zur vollständigen Umsetzung. Der klaren Reaktionslösung werden 33,6 Teile des salzsauer diazotierten primären Kondensationsproduktes aus 1,3-Phenylendiamin-4-sulfonsäure und Cyanurchlorid zugesetzt und unter Zugabe von 16 Teilen Natriumbicarbonat und 9,2 Teilen Soda bei pH 5,5 - 6 ausgekuppelt. Man neutralisiert, fügt der klaren Reaktionslösung 7,2 Teile Dinatriumhydrogenphosphat und 6 Teile Natriumdihydrogenphosphat zu und fällt den Farbstoff mit Kaliumchlorid. Das Preßgut wird sprühgetrocknet. Man erhält ein orangefarbenes Produkt, das Baumwolle in brillanten Orangetönen mit sehr guter Lichtechtheit färbt.

Beispiel 4

12 Teile 2-Amino-8-hydroxynaphthalin-6-sulfonsäure werden in 250 Teilen Wasser neutral gelöst, 24 Teile Natriumacetat zugesetzt, mit Eis auf 0 °C gekühlt und portionsweise insgesamt 14,8 Teile fein pulverisiertes o-Sulfobenzoesäureanhydrid zugegeben. Man rührt bis zur vollständigen Umsetzung bei 0 - 5 °C und neutralisiert anschließend die klare Reaktionslösung. 16,8 Teile des salzsauer diazotierten primären Kondensationsproduktes aus 1,3-Phenylendiamin-4-sulfonsäure und Cyanurchlorid

werden eingetragen und bei 0 - 5 °C unter Zugabe von 5,8 Teilen Natriumbicarbonat und 10,2 Teilen Soda ein Kupplungs-pH-Wert von 6 - 6,5 gehalten. Dem neutralisierten Reaktionsgemisch werden 3,6 Teile Dinatriumhydrogenphosphat und 3 Teile Natriumdihydrogenphosphat zugesetzt und der Farbstoff mit Siedesalz gefällt. Das Preßgut wird gefriergetrocknet. Man erhält ein rotes Pulver, das Baumwolle in brillanten scharlachroten Tönen mit guter Lichtechtheit und sehr guter Naßechtheit färbt.

Die in den Beispielen 3 und 4 genannten Farbstoffe entsprechen der allgemeinen Formel

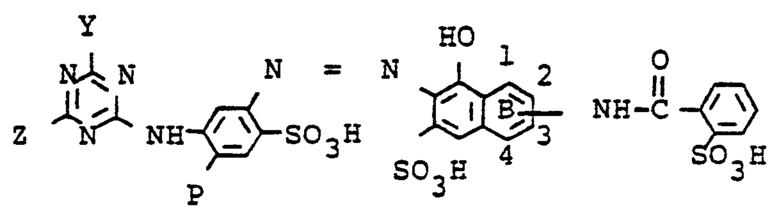

in der Y und Z = Chlor, P = Wasserstoff ist und die Sulfobenzoylaminogruppe im Naphthalinkern B in 3- bzw. 2-Stellung steht.

Weitere Farbstoffe, die gemäß den Angaben in den genannten Beispielen gefertigt wurden und die obiger allgemeiner Formel entsprechen, sind in Tabelle 1 zusammengefaßt.

Tabelle 1

| Bsp. | Z | P | Y | Verknüpfung im Ring B | Farbton |
|---|---|---|---|---|---|
| 5 | $-NH_2$ | H. | Cl | 3- | orange |
| 6 | 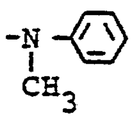 | H | Cl | 3- | " |
| 7 | 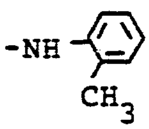 | H | F | 3- | " |
| 8 | 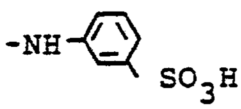 | H | Cl | 3- | " |
| 9 | 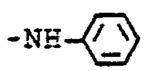 | H | Cl | 2- | scharlach-rot |
| 10 | 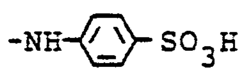 | H | Cl | 2- | " |
| 11 | $-NH_2$ | H | Cl | 2- | " |
| 12 | 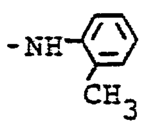 | H | Cl | 2- | " |

Beispiel 13

31,9 Teile 1-Amino-8-hydroxynaphthalin-3,6-disulfonsäure werden in 400 Teilen Wasser gelöst, 32 Teile Natriumacetat zugesetzt, mit Eis auf 0 °C gekühlt und portionsweise insgesamt 31,3 Teile fein pulverisiertes o-Sulfobenzoesäureanhydrid zugegeben. Man rührt bis zum Ende der Acylierung bei 0 - 5 °C und neutralisiert anschließend die klare Reaktionslösung. 33,6 Teile des salzsauer diazotierten primären Kondensationsprodukts aus 1,3-Phenylendiamin-4-sulfonsäure und Cyanurchlorid werden eingetragen und bei 0 - 5 °C unter Zugabe von 26,5 Teilen Natriumbikarbonat gekuppelt. Der neutralisierten, klärfiltrierten Reaktionslösung werden 6 Teile Natriumdihydrogenphosphat und 7,2 Teile Dinatriumhydrogenphosphat zugesetzt und der Farbstoff mit Siedesalz gefällt. Das Preßgut wird gefriergetrocknet. Man erhält ein dunkelrotes Pulver, das Baumwolle mit sehr guter Naß- und Lichtechtheit in brillanten roten Tönen färbt.

Beispiel 14

Ersetzt man die in Beispiel 13 genannte 1-Amino-8-hydroxynaphthalin-3,6-disulfonsäure durch 1-Amino-8-hydroxy-4,6-disulfonsäure, so erhält man einen Farbstoff mit ähnlichen Eigenschaften, der Baumwolle in brillanten gelbstichig roten Tönen färbt.

Die in den Beispielen 13 und 14 genannten Farbstoffe entsprechen der allgemeinen Formel

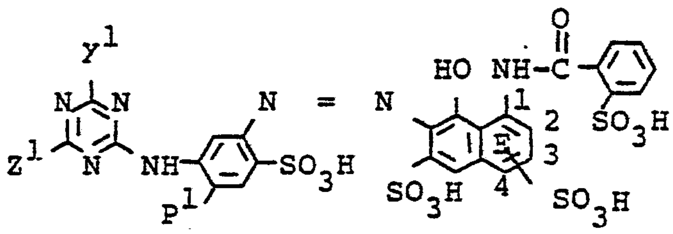

in der $Z^1$ und $Y^1$ = Chlor, $P^1$ = Wasserstoff ist und die Sulfogruppe im Ring E in 3- bzw. 4-Stellung steht.

Weitere Farbstoffe, die gemäß den Angaben in den genannten Beispielen gefertigt werden und die obiger allgemeiner Formel entsprechen, sind in Tabelle 2 zusammengefaßt.

Tabelle 2

| Bsp. | $Z^1$ | P | Y | Stellung im Ring E | Farbton |
|---|---|---|---|---|---|
| 15 | $-NH_2$ | H | Cl | 3- | rot |
| 16 | 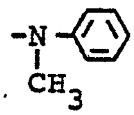 | H | Cl | 3- | " |
| 17 | 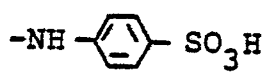 | H | Cl | 3- | " |
| 18 | 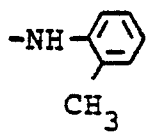 | H | F | 3- | " |
| 19 | 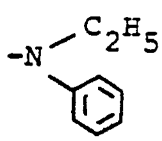 | H | F | 3- | " |
| 20 | 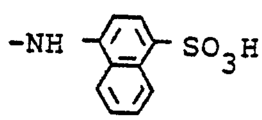 | H | Cl | 3- | " |
| 21 | $-NH_2$ | H | Cl | 4- | gelbstichig rot |
| 22 | 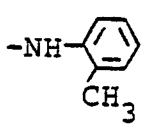 | H | F | 4- | " |
| 23 | 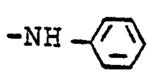 | H | Cl | 4- | " |

Patentansprüche

1. Reaktivfarbstoffe der allgemeinen Formel

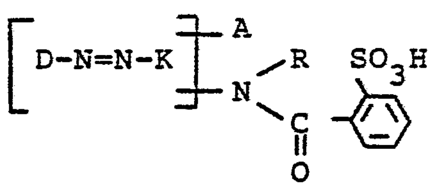

in der

D den Rest einer Diazokomponente der Anilin- oder Naphthalinreihe,

A einen reaktiven Rest, der direkt oder über eine Imino- oder Alkyliminogruppe an einen aromatischen Ring des Azofarbstoffs gebunden ist,

R Wasserstoff oder gegebenenfalls substituiertes Alkyl und

K den Rest einer gegebenenfalls azogruppenhaltigen Kupplungskomponente bedeuten.

2. Reaktivfarbstoffe gemäß Anspruch 1 der Formel

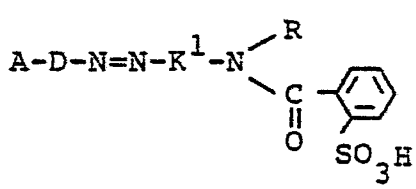

in der

$K^1$ der Rest einer Kupplungskomponente der Anilin-, Naphthalin-, Pyrazol-, Pyridin-, Pyrimidin- oder Acetessigarylidreihe ist und A, D und R die angegebene Bedeutung haben.

0083765



3. Reaktivfarbstoffe gemäß Anspruch 1 der Formel

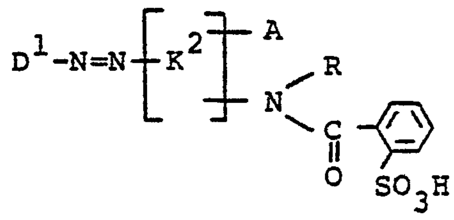

in der

$D^1$ der sulfogruppenhaltige Rest einer Diazokomponente der Anilin- oder Naphthalinreihe,

$A^1$ ein Fluor- oder Chlorpyrimidin- oder Fluor- oder Chlortriazinrest und

$K^2$ ein sulfogruppenfreier Rest der Anilinreihe sind und

R die angegebene Bedeutung hat.

4. Reaktivfarbstoffe gemäß Anspruch 1 der Formel

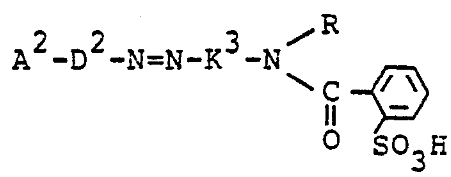

in der

$D^2$ ein sulfogruppenhaltiger Rest einer Diazokomponente der 1,3- oder 1,4-Diaminobenzol- oder 2,5- oder 2,6-Diaminonaphthalinreihe,

$K^3$ ein sulfogruppenhaltiger Rest einer Kupplungskomponente der Pyrazolon-, Aminonaphthalin- oder Aminonaphtholreihe und

$A^2$ ein reaktiver Chinoxalinoyl-, Pyrimidinyl-, Triazinyl-, Vinylsulfonyl- oder Sulfatoäethylsulfonylrest sind und

R die angegebene Bedeutung hat.

5. Reaktivfarbstoffe gemäß Anspruch 1, wobei R Wasserstoff oder Methyl ist.

6. Reaktivfarbstoffe gemäß Anspruch 4, wobei $A^2$ ein reaktiver Triazinylrest ist.

7. Reaktivfarbstoffe gemäß Anspruch 4, wobei $D^2$ ein 1,3- oder 1,4-Diaminosulfophenylenrest ist.

8. Reaktivfarbstoffe gemäß Anspruch 4, wobei $K^3$ ein Rest der Aminonaphtholreihe ist.

9. Verwendung der Farbstoffe gemäß Anspruch 1 zum Färben hydroxyl- und aminogruppenhaltiger Substrate, insbesondere von Cellulosefasern.